# EUROPEAN PATENT APPLICATION

(11) **EP 4 557 072 A1**
(43) Date of publication of application: **21.05.2025**
(21) Application number: 24208003.4
(22) Date of filing: 22.10.2024
(51) Int. Cl.: G06F 3/06, G06F 21/79, G06F 21/64, H04L 9/32

(54) **UNIVERSAL FLASH STORAGE DEVICE FOR PREVENTING REPLAY ATTACK, OPERATING METHOD THEREOF, AND UNIVERSAL FLASH STORAGE SYSTEM**

(30) Priority: 20.11.2023 KR 20230161031; 17.05.2024 KR 20240064800
(71) Applicant: Samsung Electronics Co., Ltd, Suwon-si, Gyeonggi-do 16677 (KR)
(72) Inventor: JUNG, Daejin, 16677 Suwon-si (KR); KIM, Minji, 16677 Suwon-si (KR); LEE, Myeongjong, 16677 Suwon-si (KR); KIM, Hyungsup, 16677 Suwon-si (KR); JO, Seongchan, 16677 Suwon-si (KR); PARK, Jeongwoo, 16677 Suwon-si (KR)
(74) Representative: Marks & Clerk LLP

(57) **Abstract**

Provided are a universal flash storage (UFS) device for preventing a replay attack, a method of operating the same, and a UFS system. The UFS device including: a memory including a replay protection memory block (RPMB) region, the RPMB region including one or more index fields storing a second write failure index; and a memory controller including at least one controller memory storing one or more instructions, wherein the memory controller is configured to execute the one or more instructions to cause the UFS device to: receive, from an external device, an RPMB write request including a first write failure index, meta information, and a first message authentication code generated based on the first write failure index and the meta information, and determine whether to perform an authentication operation on the external device based on the first write failure index and the second write failure index.

## Description

### BACKGROUND

### 1. Field

The disclosure relates to an electronic device, and more particularly, to a universal flash storage (UFS) device for preventing a replay attack, a method of operating the same, and a UFS system.

### 2. Description of Related Art

Semiconductor memories are widely used to store data in various electronic devices such as computers, wireless communication devices, etc. Nonvolatile memories, for example, are devices capable of storing data even in an environment in which power is not supplied to devices. Various mobile devices or electronic devices such as smartphones, desktop computers, laptop computers, tablet personal computers (PCs), and wearable devices are widely used. Such electronic devices may include storage devices for storing data. A storage device used in a mobile device, a portable device, an electronic device of a vehicle, or an embedded system may be a universal flash storage (UFS) device. Universal flash storage (UFS) is a flash storage specification for devices such as mobile devices, portable devices, electronic devices of vehicles, or embedded systems.

A storage device such as the UFS device may store data sensitive to users (e.g., personal information, an authentication key, a password, etc.). To prevent malicious users (or attackers) from accessing sensitive data, the storage device may support a replay protected memory block (hereinafter referred to as "RPMB"), and only allow an authenticated device to read or write data stored in an RPMB region. A replay attack is one of the methods of attack in which an attacker accesses the RPMB region. In order to reflect measures to prevent a replay attack to the UFS standard, specific technologies preventing the replay attack have been researched.

### SUMMARY

The disclosure provides a universal flash storage (UFS) device for preventing a replay attack, a method of operating the same, and a UFS system.

According to an aspect of the disclosure, a universal flash storage (UFS) device includes: a memory including a replay protection memory block (RPMB) region, the RPMB region including one or more index fields storing a second write failure index; and a memory controller including at least one controller memory storing one or more instructions, wherein the memory controller is configured to execute the one or more instructions to cause the UFS device to: receive, from an external device, an RPMB write request including a first write failure index, meta information, and a first message authentication code generated based on the first write failure index and the meta information, and determine whether to perform an authentication operation on the external device based on the first write failure index and the second write failure index.

According to an aspect of the disclosure, a method of operating a universal flash storage (UFS) device configured to communicate with an external device includes: receiving a replay protection memory block (RPMB) write request including a first write failure index, meta information, and a first message authentication code generated based on the first write failure index and the meta information; identifying whether to perform an authentication operation on the external device based on a second write failure index included in an RPMB region of the UFS device and the first write failure index; and based on performing the authentication operation, outputting a response including a result of the authentication operation.

According to an aspect of the disclosure, a universal flash storage (UFS) system includes: a UFS host including: at least one host processor; and at least one host memory storing one or more host instructions, wherein the at least one host processor is configured to execute the one or more host instructions to cause the UFS host to: obtain a first message authentication code based on a first write failure index and meta information, and output a replay protection memory block (RPMB) write request including the first message authentication code, the first write failure index, and the meta information as an RPMB operation; and a UFS device including: at least one device processor; and at least one device memory storing one or more device instructions, wherein the at least one device processor is configured to execute the one or more device instructions to cause the UFS device to: determine whether to perform an authentication operation on the UFS host based on the first write failure index.

At least some of the above and other features of the invention are set out in the claims.

### BRIEF DESCRIPTION OF DRAWINGS

The above and other aspects and features of certain embodiments of the present disclosure will be more apparent from the following description taken in conjunction with the accompanying drawings, in which:
FIG. 1 is a block diagram illustrating a memory system according to an embodiment;
FIG. 2 is a diagram illustrating an example of a replay attack;
FIG. 3 is a diagram illustrating a format of a command universal flash storage (UFS) protocol information unit (UPIU) in a normal replay protected memory block (RPMB) operation;
FIG. 4 is a diagram illustrating a format of a data output UPIU in a normal RPMB operation;
FIG. 5 is a diagram illustrating a format of a data input UPIU in a normal RPMB operation;
FIG. 6 is a diagram illustrating a format of a command UPIU in an advanced RPMB operation;
FIG. 7 is a diagram illustrating a format of a response UPIU in an advanced RPMB operation;
FIG. 8 is a diagram illustrating an operation of a device according to an embodiment of the present disclosure;
FIG. 9 is a diagram illustrating a plurality of RPMB regions according to an embodiment of the present disclosure;
FIG. 10 is a diagram illustrating a format of a query request UPIU related to a write descriptor according to an embodiment of the present disclosure;
FIG. 11 is a diagram illustrating a format of a query response UPIU related to a read descriptor according to an embodiment of the present disclosure;
FIG. 12 is a diagram illustrating a format of a query request UPIU related to write attributes according to an embodiment of the present disclosure;
FIG. 13 is a diagram illustrating an embodiment of the present disclosure in which a write failure index is recorded;
FIG. 14 is a diagram illustrating an embodiment of the present disclosure in which fields in which a write failure index is stored are initialized in a power cycle;
FIG. 15 is a diagram illustrating an embodiment of the present disclosure in which fields in which write failure indices are stored are initialized in a read only mode;
FIG. 16 is a flowchart illustrating a method of operating a device, according to an embodiment of the present disclosure;
FIG. 17 is a diagram illustrating a UFS system according to an embodiment of the present disclosure; and
FIGS. 18A, 18B, and 18C are diagrams illustrating a form factor of a UFS card.

### DETAILED DESCRIPTION

Hereinafter, one or more embodiments of the present disclosure will be described in detail with reference to the accompanying drawings.

In the following description, like reference numerals refer to like elements throughout the specification. Terms such as "unit", "module", "member", and "block" may be embodied as hardware or software. As used herein, a plurality of "units", "modules", "members", and "blocks" may be implemented as a single component, or a single "unit", "module", "member", and "block" may include a plurality of components.

It will be understood that when an element is referred to as being "connected" with or to another element, it can be directly or indirectly connected to the other element, wherein the indirect connection includes "connection via a wireless communication network".

Also, when a part "includes" or "comprises" an element, unless there is a particular description contrary thereto, the part may further include other elements, not excluding the other elements.

Throughout the description, when a member is "on" another member, this includes not only when the member is in contact with the other member, but also when there is another member between the two members.

As used herein, the expressions "at least one of a, b or c" and "at least one of a, b and c" indicate "only a," "only b," "only c," "both a and b," "both a and c," "both b and c," and "all of a, b, and c."

It will be understood that, although the terms "first", "second", "third", etc., may be used herein to describe various elements, is the disclosure should not be limited by these terms. These terms are only used to distinguish one element from another element.

As used herein, the singular forms "a," "an" and "the" are intended to include the plural forms as well, unless the context clearly indicates otherwise.

With regard to any method or process described herein, an identification code may be used for the convenience of the description but is not intended to illustrate the order of each step or operation. Each step or operation may be implemented in an order different from the illustrated order unless the context clearly indicates otherwise. One or more steps or operations may be omitted unless the context of the disclosure clearly indicates otherwise.

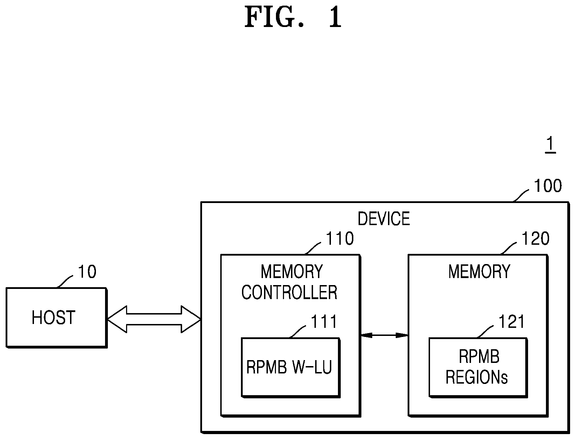

FIG. 1 is a block diagram illustrating a memory system 1 according to an embodiment.

Referring to FIG. 1, the memory system 1 may include a host 10 and a device 100.

The host 10 may communicate with the device 100 through an interface. The host 10 may provide the device 100 with a write request requesting the device 100 to store data. The host 10 may be implemented by a processor such as a central processing unit (CPU), an application processor (AP), a system-on-a-chip (SoC), etc., and may process data. The host 10 may perform an operating system (OS) and/or various applications. The host 10 may include a physical layer, a multi-protocol multiplexer, interface circuits, a consistency/cache circuit, a bus circuit, at least one core and an input/output device.

In an embodiment, the host 10 may transmit a request, to the device 100, to perform a replay protection memory block (hereinafter referred to as "RPMB") operation on an RPMB region of the device 100. An RPMB may be a region included in a specific well known logical unit (hereinafter referred to as "W-LU") and/or a memory 120. A well known logical unit (W-LU) is a logical unit that only performs specific functions. Well known logical units allow a device to issue requests to receive specific information (e.g. relating to a small computer system interface (SCSI) target). The RPMB region may be a space in which resources included in the RPMB are stored. Only an authorized device may access the RPMB. In this case, the host 10 may transmit an authentication key, code, meta information, data, etc. for authentication to the device 100. The RPMB operation may include a normal RPMB operation or an advanced RPMB operation disclosed in the UFS standard published by the Joint Electron Device Engineering Council (JEDEC) (e.g. such as UFS version 4.0 (JESD220F UFS, published August 2022)). Hereinafter, the UFS standard published by the JEDEC according to an embodiment may be briefly referred to as the "UFS standard" for convenience of explanation.

The device 100 may store data provided by the host 10, and may provide data stored in an internal storage space to the host 10. In an embodiment, the device 100 may be a storage device implemented by a UFS. The device 100 may include a memory controller 110 and a memory 120.

The memory controller 110 may control the memory 120 to write data to the memory 120 or to read data stored in the memory 120 in response to a request from the host 10. In an embodiment, the memory controller 110 may control a write operation (or program operation), a read operation, or an erase operation on the memory 120 by providing a command/address and/or control signal to the memory 120. In addition, data to be written and data to be read may be transmitted and received between the memory controller 110 and the memory 120.

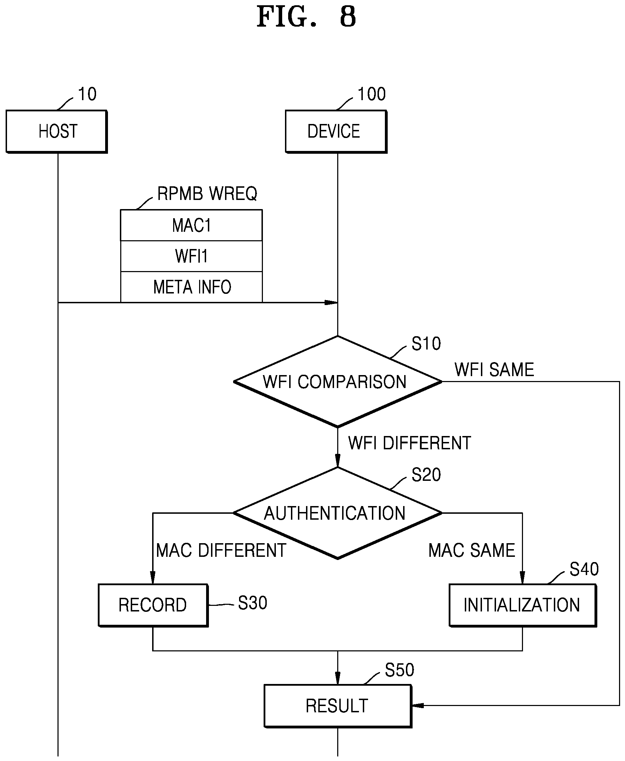

In an embodiment, the memory controller 110 may perform an authentication operation (or validation) on the host 10 to perform the RPMB operation on the RPMB region. For example, the memory controller 110 may receive the authentication key (or the code), the meta information, and the data from the host 10. The memory controller 110 may generate an authentication key based on the meta information and the data. The memory controller 110 may authenticate the host 10 by comparing the authentication key of the host 10 with the generated authentication key. An embodiment of the authentication operation will be described below in FIG. 8.

In an embodiment, the memory controller 110 may include an RPMB W-LU 111. The RPMB W-LU 111 may support an RPMB function with independent processes and memory spaces dictated by an RPMB security definition. The contents of the RPMB W-LU 111 may be read or written through successfully authenticated read and write accesses. The data may be overwritten by the host 10, but may not be erased. In an embodiment, the RPMB W-LU 111 may include a device server that handles small computer small interface (SCSI) commands and task management functions, a task manager that handles commands for command queue control, and a plurality of RPMB regions 121.

The memory controller 110 may further include a buffer memory implemented as static random access memory (SRAM), etc.

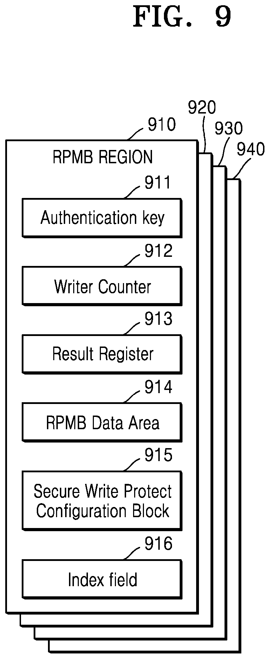

The memory 120 may include a plurality of memory blocks. Each of the memory blocks may include a plurality of memory cells. The plurality of memory cells may have various threshold voltage distributions according to programmed data. For example, the memory cell may be a single-level cell, a multi-level cell, a triple-level cell, etc. In an embodiment, the memory 120 may include the plurality of RPMB regions 121 corresponding to some of the plurality of memory blocks. The plurality of RPMB regions 121 will be described below with reference to FIG. 9. In an embodiment, the memory 120 may be implemented as a nonvolatile memory such as a NAND flash.

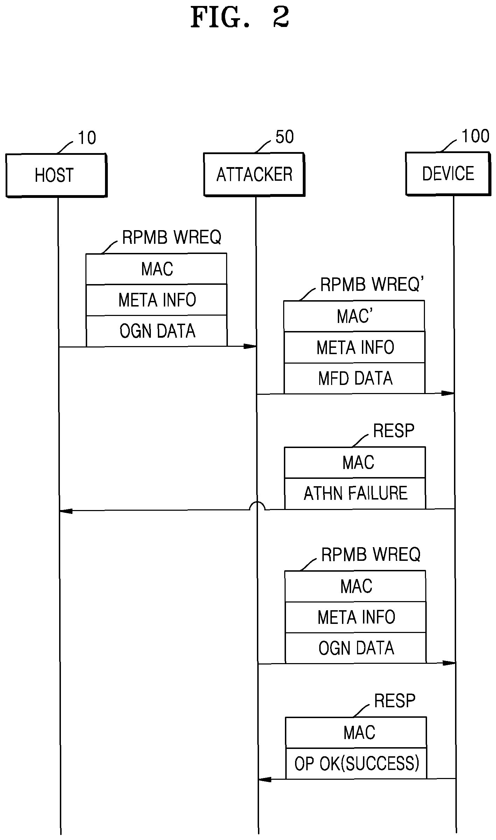

According to the above-described embodiment, the security of the device 100 may be enhanced and the reliability of the device 100 may be promoted, by providing a method of specifically preventing the replay attack proposed in the UFS standard published by the existing JEDEC. The replay attack may be an attack method in which an attacker steals (e.g. intercepts) the original message of the host 10, transmits the modified message to the device 100, induces a write failure of the device 100, and then retransmits the original message to the device 100 at a timing that the host 10 does not expect. The replay attack will be described below with reference to FIG. 2.

FIG. 2 is a diagram illustrating an example of a replay attack.

Referring to FIG. 2, the host 10 may generate a message authentication code MAC based on an algorithm, meta information META INFO, and original data OGN DATA. The algorithm and the meta information META INFO may follow what is disclosed in the UFS standard. For example, the algorithm may be keyed-hashed message authentication code secure hash algorithm 256 (HMAC SHA-256) disclosed in the UFS standard. In HMAC SHA-256 calculation, a key and a message may be inputs of HMAC SHA-256 and an output of HMAC SHA-256 may be the message authentication code MAC. The key used for MAC calculation (i.e., message authentication code calculation) may be a 256-bit authentication key stored in a target RPMB region. The message used as an input for the MAC calculation may correspond to the meta information META INFO and the data, and the meta information META INFO may be information (e.g., authentication key, data, write counter, address, block count, result, request message type, response message type, etc.) included in an RPMB message data frame (or an RPMB packet). Meta information META INFO may be or may comprise metadata. The host 10 may output an RPMB write request RPMB WREQ including a message authentication code MAC, the meta information META INFO, and the original data OGN DATA. In an embodiment, the RPMB write request RPMB WREQ may be information that accesses a target RPMB indicating a specific RPMB region among the plurality of RPMB regions 121 of the device 100 and requests the target RPMB to write data. For example, the RPMB write request RPMB WREQ may include a code representing any one of an authenticated data write request, a secure write protect block write request, and an RPMB purge enable request disclosed in the UFS standard.

An attacker 50 may steal the RPMB write request RPMB WREQ of the host 10. The attacker 50 may modify the original data OGN DATA in the stolen RPMB write request RPMB WREQ. The attacker 50 may transmit an RPMB write request RPMB WREQ' including modified data MFD DATA, a message authentication code MAC', and the meta information META INFO to the device 100.

The device 100 may receive the RPMB write request RPMB WREQ' from the attacker 50. The device 100 may generate the message authentication code MAC based on the RPMB write request RPMB WREQ' and the algorithm. However, because the message authentication code MAC generated by the device 100 is different from the message authentication code MAC' included in the RPMB write request RPMB WREQ', the device 100 determines that authentication has failed. Accordingly, the device 100 may transmit a response RESP including the message authentication code MAC and an authentication result code to the host 10. In this regard, the authentication result code is an authentication failure code ATHN FAILURE indicating failure, and a code value disclosed in the UFS standard is "0002h(0082h)".

The host 10 may receive the response RESP of the device 100, and may check the authentication result based on the authentication result code. The attacker 50 may transmit the RPMB write request RPMB WREQ of the host 10 to the device 100 at a time when the host 10 did not expect. The device 100 may generate the message authentication code MAC based on the RPMB write request RPMB WREQ and the algorithm, and because the generated message authentication code MAC and the message authentication code MAC of the RPMB write request RPMB WREQ match each other, the device 100 may determine that authentication has been successful and write and store the original data OGN DATA in the target RPMB region. The device 100 may output the response RESP including the message authentication code MAC and the authentication result code. In this case, the authentication result code is an operation approval code OP OK(SUCCESS) that may indicate the success of an operation, and the code value disclosed in the UFS standard is "0000h(0080h)".

The UFS standard version 4.0 published by the JEDEC may have a method of preventing the replay attack by setting a value in a Nonce field during a write operation (e.g., an "authenticated data write request", etc.) related to an RPMB operation. However, in the UFS standard version 4.0, because utilization techniques, exception handling techniques, and compatibility maintenance techniques after false failure are not specified, a specific method of defending the replay attack needs to be prepared. Hereinafter, the RPMB operation will be described below, and a replay attack defense method applicable to the RPMB operation will be described below.

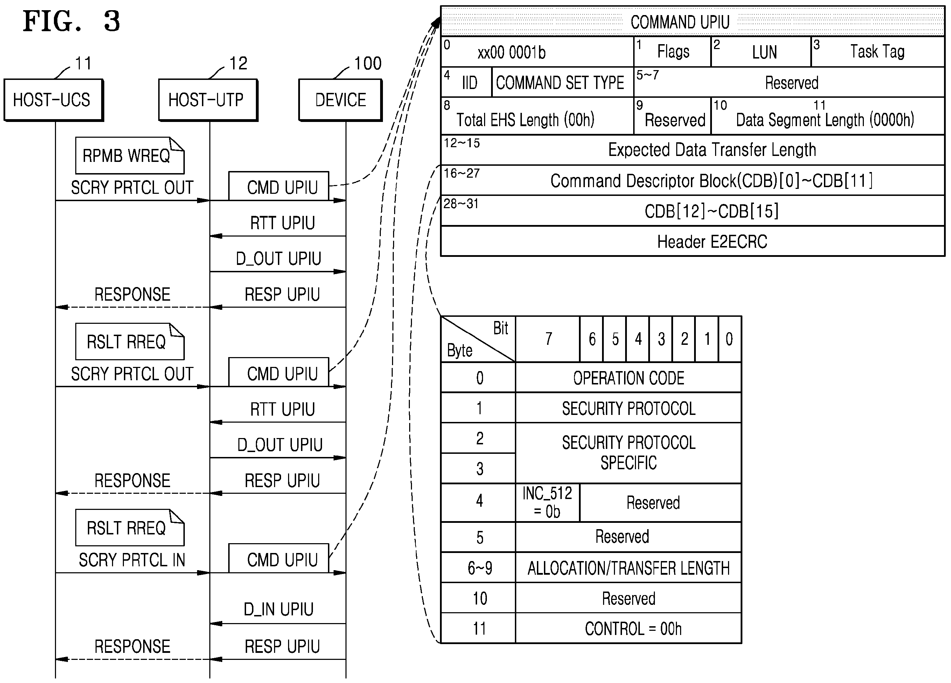

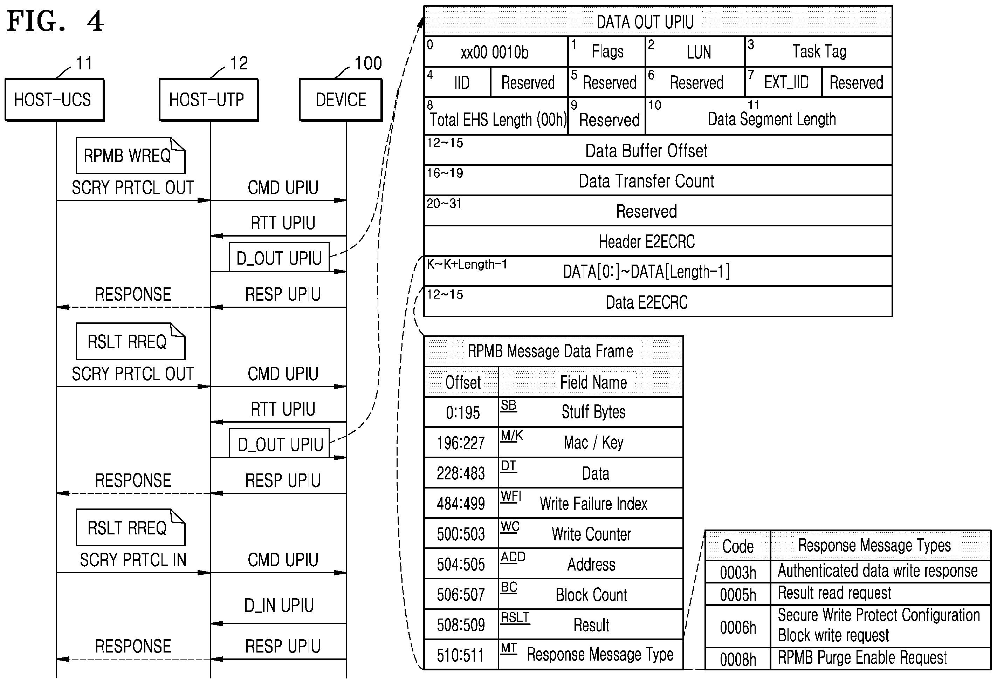

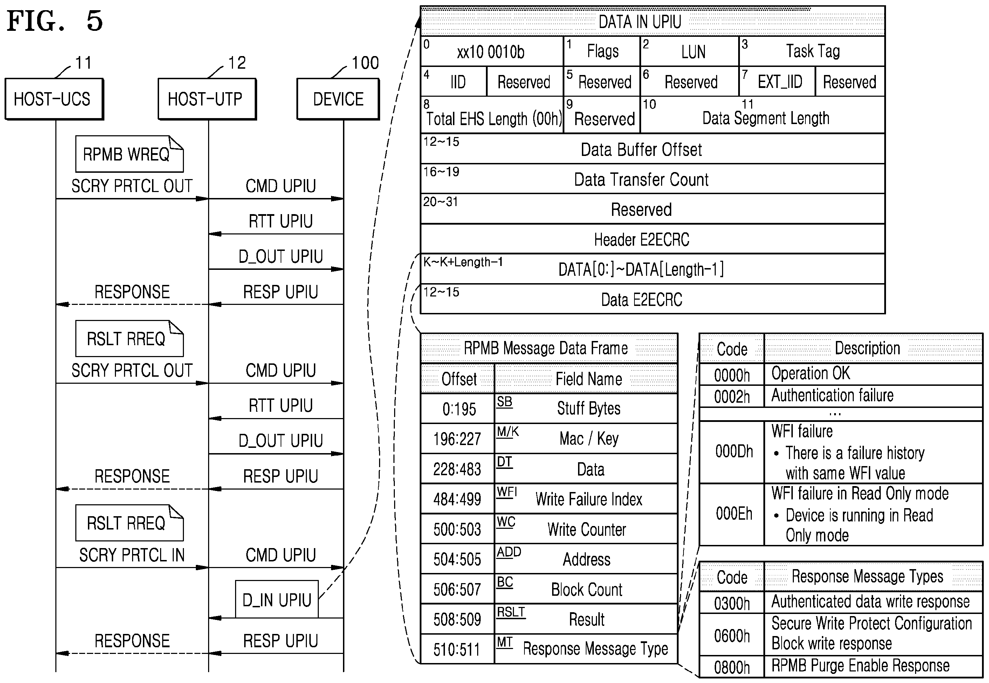

FIG. 3 is a diagram illustrating a format of a command UFS protocol information unit (UPIU) CMD UPIU in a normal RPMB operation. FIG. 4 is a diagram illustrating a format of a data output UPIU D_OUT UPIU in the normal RPMB operation. FIG. 5 is a diagram illustrating a format of a data input UPIU D_IN UPIU in the normal RPMB operation.

Referring to FIGS. 3 to 5, various UFS protocol information units (UPIUs) may be transmitted and received between the host 10 and the device 100 in a normal RPMB mode disclosed in the UFS standard.

A sequence of the RPMB write request RPMB WREQ may be initiated by a security protocol output (i.e., "SECURITY PROTOCOL OUT" command SCRY PRTCL OUT) of an initiator disclosed in the UFS standard. For example, a host-UFS Command Set Layer (UCS) 11 of the host 10 may output the security protocol output command SCRY PRTCL OUT, and a host-UFS Transport Protocol Layer (UTP) 12 of the host 10 may transmit the command UPIU CMD UPIU to the device 100. The device 100 may transmit a ready to transfer UPIU RTT UPIU to the host-UTP 12. The host-UTP 12 may transmit the data output UPIU D_OUT UPIU to the device 100. The device 100 may perform a validation on the host 10 and store data provided from the valid host 10, and may return a response UPIU RESP UPIU indicating a good status on the security protocol output command SCRY PRTCL OUT to the host-UTP 12, regardless of whether write of the authenticated data is successful. The host-UTP 12 may transmit the response RESP to the host-UCS 11.

The host-UCS 11 may output the security protocol output command SCRY PRTCL OUT for a result read request RSLT RREQ. The result read request RSLT REQ is a verification process on the RPMB write request RPMB WREQ. In this case, the command UPIU CMD UPIU may be transmitted to the device 100, the ready to transfer UPIU RTT UPIU may be transmitted to the host-UTP 12, and the data output UPIU D_OUT UPIU may be transmitted to the device 100. The response UPIU RESP UPIU indicating the good status may be generally returned to the host-UTP 12, and the response RESP may be transmitted to the host-UCS 11.

A security protocol input command SCRY PRTCL IN for the result read response RSLT RRESP may be output from the host-UCS 11. The result read request RSLT RREQ may be information for receiving a result read by the device 100. In this case, when the command UPIU CMD UPIU is transmitted to the device 100, the device 100 may transmit the data input UPIU D_IN UPIU to the host-UTP 12 and return the response UPIU RESP UPIU to the host-UTP 12. The response RESP may be transmitted to the host-UCS 11.

Referring to FIG. 3, an UPIU may be data basically configured to have the size of 32 Bytes. "0 to 31" indicated in the UPIU may each indicate a field of 1 byte. The command UPIU CMD UPIU may include an operation code (e.g., "xx00 0001b"), flags, a logical unit number (LUN), a task tag, an initiator ID (IID), a command set type, total extra header segment (EHS) length, a data segment length, an expected data transfer length, a command descriptor block (hereinafter referred to as "CDB"), and a header end-to-end cyclic redundancy check (CRC) E2ECRC. The header E2ECRC may be omitted in some cases. Fields of addresses 16 to 27 of the command UPIU CMD UPIU may include an operation code field OPERATION CODE, a security protocol field SECURITY PROTOCOL, a security protocol specific field SECURITY PROTOCOL SPECIFIC, an allocation/transfer length field ALLOCATION/TRANSFER LENGTH, etc. In this regard, a code value "ECh" indicating JEDEC UFS may be set in the security protocol field SECURITY PROTOCOL, and code values of RPMB Protocol ID indicating the target RPMB region may be set in the security protocol specific field SECURITY PROTOCOL SPECIFIC.

Referring to FIG. 4, a field of the data output UPIU D_OUT UPIU is generally similar to the command UPIU CMD UPIU, but a value of an operation code included in a field of address 0 in the data output UPIU D_OUT UPIU may be "xx00 010b". The command set type COMMAND SET TYPE is omitted, and an identifier EXT_ID indicating an MSB nibble of an initiator identifier Nexus may be included in a field of address 7 of the data output UPIU D_OUT UPIU. In the data output UPIU D_OUT UPIU, fields of addresses 12 to 15 are data buffer offsets, and fields of addresses 16 to 19 are data transfer counts. In the data output UPIU D_OUT UPIU, specific data is included in fields of addresses K to K+Length-1. "Length" may be a value of a data segment length. In the normal RPMB mode, an RPMB message data frame may be included in the fields of addresses K to K+Length-1 in the data output UPIU D_OUT UPIU, and because the size of the RPMB message data frame is 512 bytes, "Length" may be 512.

The RPMB message data frame may include a stuff bytes field SB, a code and key field M/K, a data field DT, a write failure index field WFI, a write counter field WC, an address field ADD, a block count field BC, a result field RSLT, and a message type field MT. In an embodiment, the meta information META INFO may include an authentication key, and information included in each of the data field DT, the write counter field WC, the address field ADD, the block count field BC, the result field RSLT, and the message type field MT. When necessary, the meta information META INFO may further include a write failure index of the write failure index field WFI. The stuff bytes field SB may include stuff bytes. The code and key fields M/K may include the message authentication code MAC and the authentication key. The authentication key may be used in an operation of programming the authentication key disclosed in the UFS standard. The data field DT is data to be written or read by a signed access, and may include specific data to be written to a target RPMB. The write failure index field WFI may include a write failure index used for inputting a MAC calculation and for recording a case in which authentication fails or details to the device 100. The write failure index may be a value determined by the host 10. The write counter field WC may include a write counter representing the total amount of successfully authenticated data write operations. The address field ADD may include a logical block address (LBA) of data to be programmed in the RPMB region or read from the RPMB region. The block count field BC may include a block count representing the number of 256-Byte logical blocks requested to be read or programmed. A value of the result field RSLT according to the UFS standard may be "0000h". The message type field MT may include any one of various codes related to a request. In an embodiment, the message type field MT according to the UFS standard may include any one of "0003h", "0006h", and "0008h" included in request message types. The request message type "0003h" according to the UFS standard represents an authenticated data write request. The request message type "0006h" according to the UFS standard represents a secure write protect configuration block write request. The request message type "0008h" according to the UFS standard represents an RPMB purge enable request. In an embodiment, the message type field MT according to the UFS standard may represent a code value "0005h" indicating a result read request.

In an embodiment, when receiving an RPMB message (e.g., the RPMB message data frame), the device 100 may first check whether a write counter has expired, and may check a value of each of an address and a block counter. When the write counter has not expired, the device 100 may calculate the message authentication code MAC based on the request message type, the block counter, a write counter, the address, the write failure index, and the data, and may perform an authentication operation by comparing the calculated message authentication code MAC with the message authentication code MAC of the code and key field M/K. When the two message authentication codes are different from each other in the authentication operation, the device 100 sets the code value of the result field RSLT to "0002h" (authentication failure), and data is not written in the target RPMB region. When the two message authentication codes are the same, the device 100 may compare the write counter of the write counter field WC with a pre-stored write counter, when message authentication codes and write counters are all the same, the write request is considered to be authenticated, and data is written in a physical space corresponding to the address. When a write operation is successfully performed, the write counter may be increased by 1.

In an embodiment, when the value of the message type field MT according to the UFS standard is "0003h", a loop in which the ready to transfer UPIU RTT UPIU and the data output UPIU D_OUT UPIU are transferred may be repeated in a sequence of the RPMB write request RPMB WREQ.

In an embodiment, when the value of the message type field MT according to the UFS standard is "0008h", a sequence of the result read request RSLT RREQ is omitted.

According to the above-described embodiments, the security of the device 100 may be enhanced by extending the type of write request capable of defending the replay attack not only to the authenticated data write request, but also to the secure write protect block write request and the RPMB purge enable request.

Referring to FIG. 5, the field of the data input UPIU D_IN UPIU is generally the same as the data command UPIU CMD UPIU except for the value of the operation code. In the data input UPIU D_IN UPIU, the value of the operation code included in the field of addresses 0 may be "xx00 010b". In the normal RPMB mode, the fields of addresses K to K+Length-1 in the data input UPIU D_IN UPIU may also include the RPMB message data frame of 512 bytes, and the result field RSLT in the RPMB message data frame may include any one of various code values. For example, in the result field RSLT, "0000h" represents operation OK, "0002h" represents authentication failure, "000Dh" represents authentication failure because the value of the write failure index of the write failure index field WFI is the same as the value of the write failure index previously stored in the device 100, and "000Eh" represents authentication failure because the device 100 is running in a read only mode. However, the disclosure is not limited thereto. The result field RSLT may include other code values defined in the UFS standard. In the RPMB message data frame of the data input UPIU D_IN UPIU, the message type field MT may include any one of various code values related to a response. In an embodiment, the message type field MT according to the UFS standard may include any one of "0300h", "0600h", and "0800h" included in response message types. The response message type "0300h" according to the UFS standard represents an authenticated data write response. The response message type "0600h" according to the UFS standard represents a secure write protect configuration block write response. The response message type "0800h" according to the UFS standard represents an RPMB purge enable response.

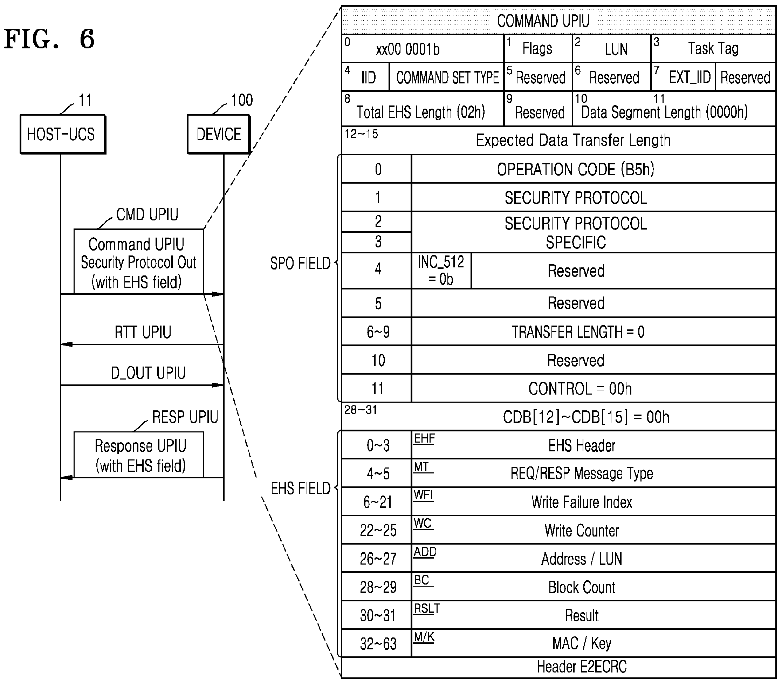

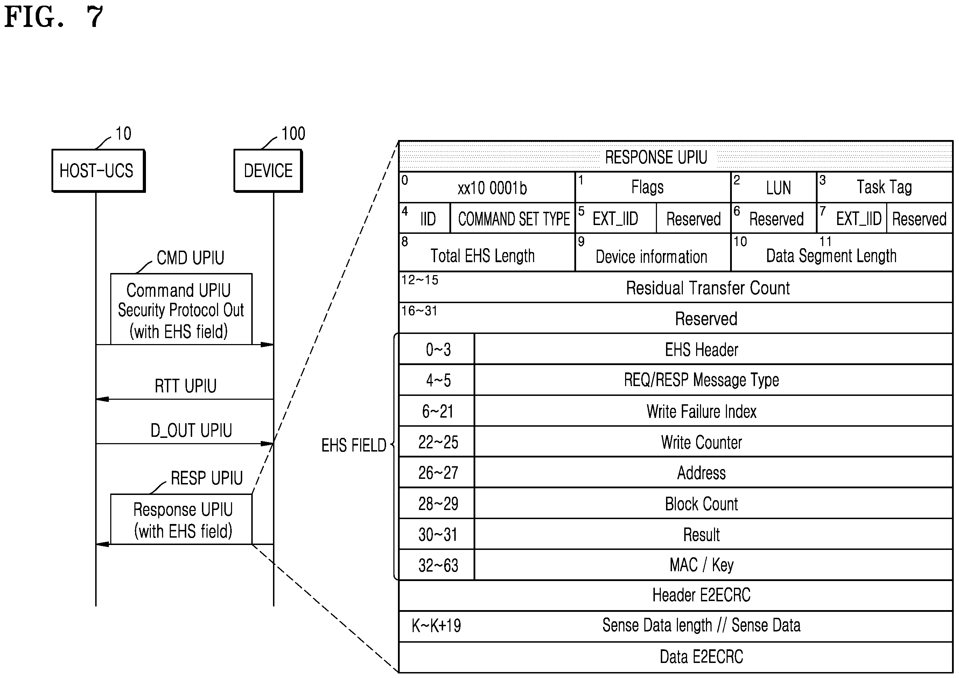

FIG. 6 is a diagram illustrating a format of the command UPIU CMD UPIU in an advanced RPMB operation, and FIG. 7 is a diagram illustrating a format of the response UPIU RESP UPIU in the advanced RPMB operation.

Referring to FIGS. 6 and 7, the command UPIU CMD UPIU, the ready to transfer UPIU RTT UPIU, the data output UPIU D_OUT UPIU, and the response UPIU RESP UPIU may be transmitted and received (e.g., the terms "transmitted and received" may also be referred to as a term "transceived") between the host 10 and the device 100 in the advanced RPMB mode disclosed in the UFS standard.

Referring to FIG. 6, the command UPIU CMD UPIU includes a security protocol output field SPO FIELD as shown in FIG. 3, but an operation code at an offset 0 of the security protocol output field SPO FIELD is "B5h". The command UPIU CMD UPIU and the response UPIU RESP UPIU may each further include an EHS field EHS FIELD of 64 bytes. Similar to the RPMB message fata frame, the EHS field EHS FIELD of the command UPIU CMD UPIU may include the message type field MT, the write failure index field WFI, the write counter field WC, the address field ADD, the block count field BC, the result field RSLT, and the code and key field M/K. The message type field MT may include a code value related to a request or a response. The block count field BC may include a value of an advanced RPMB block count. The address field ADD may further include a value of an LUN as well as a value of an address. The EHS field EHS FIELD of the command UPIU CMD UPIU may further include an EHS header field EHF of 4 bytes located at offsets 0 to 3. Unlike the RPMB message data frame, data of the data field DT may be included in the data output UPIU D_OUT UPIU.

Referring to FIG. 7, the response UPIU RESP UPIU may include various information (e.g., flags, LUN, task tag, etc.) similar to the command UPIU CMD UPIU. An operation code of the response UPIU RESP UPIU is "xx10 0001b". The response UPIU RESP UPIU may further include a residual transfer count. The response UPIU RESP UPIU may further include an EHS field EHS FIELD of 64 bytes. In the response UPIU RESP UPIU, fields of addresses K to K+19 may include a sense data length and sense data.

FIG. 8 is a diagram illustrating an operation of the device 100 according to an embodiment.

Referring to FIG. 8, the host 10 may calculate and generate a first message authentication code MAC1 based on an algorithm (e.g., HMAC SHA-256), a first write failure index WFI1, data, and the meta information META INFO. The meta information META INFO may include various information (data, an authentication key, a write counter, etc.) included in the RPMB message data frame shown in FIGS. 3 to 5. The host 10 may transmit the RPMB write request RPMB WREQ, as an RPMB operation on an RPMB region of the device 100. The RPMB write request RPMB WREQ may include the first message authentication code MAC1, the first write failure index WFI1, and the meta information META INFO. In an embodiment, the RPMB write request RPMB WREQ may further include data.

The memory controller 110 of the device 100 may receive the RPMB write request RPMB WREQ from an external device (e.g., the host 10). According to an embodiment, a write failure index may be stored in the memory 120 of the device 100 before the RPMB write request RPMB WREQ is transmitted. The write failure index stored in the memory 120 may be referred to as a second write failure index.

The memory controller 110 may determine whether to perform an authentication operation on the external device (e.g., the host 10) based on the first write failure index WFI1 and the second write failure index.

In an embodiment, the memory controller 110 may perform a write failure index comparison operation (S10). For example, the memory controller 110 may compare a value of the first write failure index WFI1 with a value of the second write failure index. When a storage space in which the write failure index is to be stored in the memory 120 is empty or two write failure indices are different from each other (WFI DIFFERENT), the memory controller 110 may initiate and perform the authentication operation (S20). For example, the memory controller 110 may calculate a message authentication code based on the algorithm (e.g., HMAC SHA-256), the first write failure index WFI1, the data, and the meta information META INFO. The memory controller 110 may compare the calculated value of the message authentication code with a value of the first message authentication code MAC1, and determine an authentication result as a success or a failure according to a comparison result.

In an embodiment, when the two message authentication codes are different (MAC DIFFERENT), the memory controller 110 may write the first write failure index WFI1 to a target RPMB region (S30).

In an embodiment, when the two message authentication codes are the same (MAC SAME), the memory controller 110 may initialize a field in which the write failure index is stored in the target RPMB region (S40).

In an embodiment, the memory controller 110 may set code values representing various results such as the authentication result, a write result, etc. (S50). For example, when the two message authentication codes are different (MAC DIFFERENT), the memory controller 110 may set a code value of the result field RSLT to "0002h" (authentication failure). For example, when the two message authentication codes are the same (MAC SAME), the memory controller 110 may set one of the remaining code values in the result field RSLT except for "0002h" (authentication failure), "000Dh" (WFI failure), and "000Eh" (WFI failure by a read only mode). In this regard, the remaining code values may include, for example, "0000h" (operation good), "0001h" (general failure), "0003h" (counter failure), etc. When a write operation is successfully performed, the code value of the result field RSLT is "0000h" (operation good). For example, when the two write failure indices are the same (WFI SAME), the memory controller 110 may set the code value of the result field RSLT to "000Dh" (WFI failure).

According to the above-described embodiments, the host 10 may detect a false response caused by the attacker 50, thereby checking a state of the device 100 and enhancing the security of the device 100.

FIG. 9 is a diagram illustrating a plurality of RPMB regions 910, 920, 930, and 940 according to an embodiment.

Referring to FIG. 9, sizes of a plurality of RPMB regions 910, 920, 930, and 940 are defined in an RPMB unit descriptor, are multiples of 128 KB, have a minimum of 128 KB, and a maximum of 16 MB. According to the UFS standard, the number of RPMB regions may be 4, but is not limited thereto.

The plurality of RPMB regions 910, 920, 930, and 940 may include RPMB resources according to the UFS standard. For example, the RPMB region 910 may include RPMB resources such as an authentication key 911, a write counter 912, a result register 913, an RPMB data area 914, a secure write protect configuration block 915, an index field 916, etc. The specification of each of the authentication key 911, the write counter 912, the result register 913, the RPMB data area 914, and the secure write protect configuration block 915 is disclosed in the UFS standard.

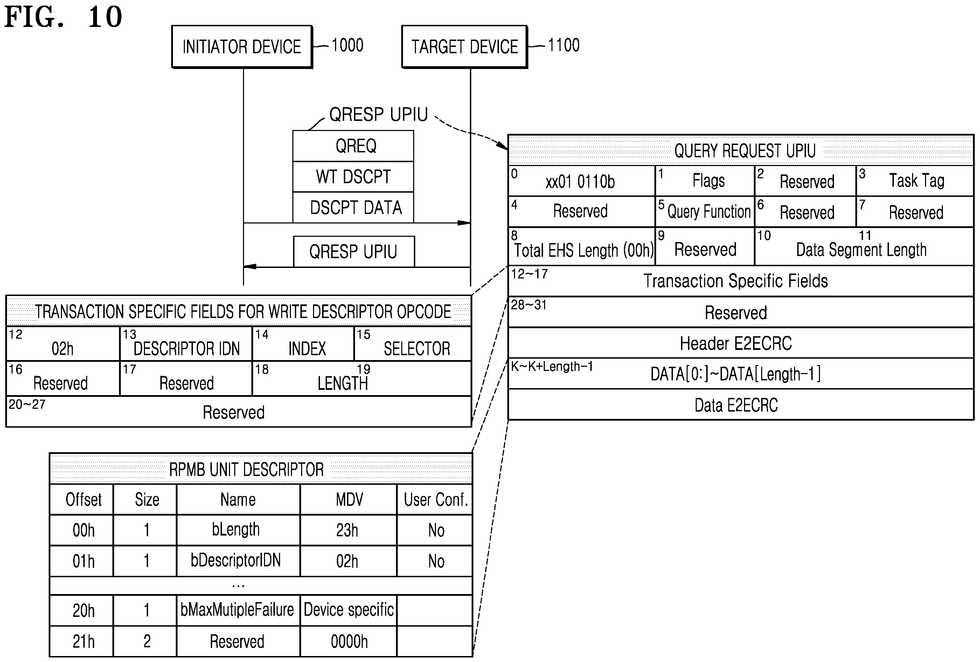

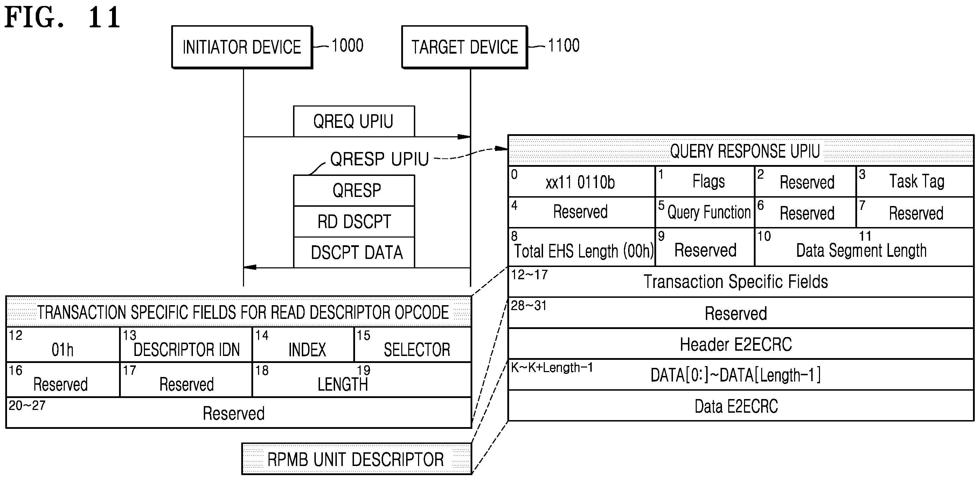

In an embodiment, the index field 916 may be a field in which a write failure index is stored. The size of one index field may be 16 bytes. One or more index fields 916 may be provided. The number of index fields 916 may be set by a sequence of query requests defined in the UFS standard, which will be described below with reference to FIGS. 10 and 11. The number of index fields 916 may correspond to the maximum number of consecutive failures allowed. Here, the maximum number of consecutive failures allowed may mean the maximum number that a write failure index may be written in an index field with respect to continuous write failures. For example, when the maximum number of consecutive failures is set to 3, the number of index fields 916 is 3, and different write failure indices may be recorded up to 3 times on the device 100, but is not limited thereto. The continuous write failures may mean that a write operation has failed multiple times due to a mismatch of message authentication codes.

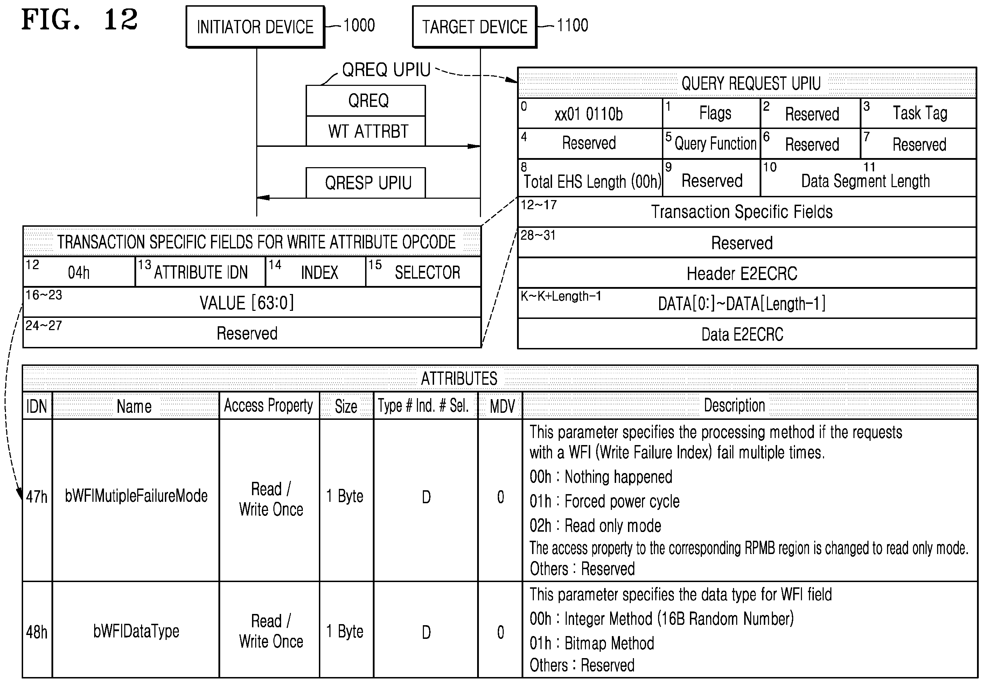

In an embodiment, a data type of the write failure index stored in one index field 916 may be set in an integer method (e.g. integer format). Accordingly, the compatibility of the device 100 with respect to a legacy device (e.g., a legacy host, etc.) may be maintained. In one or more embodiments, the data type of the write failure index stored in one index field 916 may be set in a bitmap method (e.g. bitmap format). Accordingly, the RPMB resources may be minimized and the security of the device 100 may be further enhanced. The data type of the write failure index may be set by a sequence of query requests defined in the UFS standard, which will be described below with reference to FIG. 12.

FIG. 10 is a diagram illustrating a format of a query request UPIU QREQ UPIU related to a write descriptor according to an embodiment.

Referring to FIG. 10, a sequence of query requests disclosed in the UFS standard may be started by an initiator device 1000. The initiator device 1000 may be the host 10 of FIG. 1, and a target device 1100 may be the device 100 of FIG. 1.

The initiator device 1000 may transmit the query request UPIU QREQ UPIU including a query request QREQ, a write descriptor transaction WT DSCPT, and descriptor data DSCPT DATA to the target device 1100, and the target device 1100 may transmit the query request UPIU QREQ UPIU to the initiator device 1000.

An operation code of the query request UPIU QREQ UPIU according to the UFS standard is "xx01 0110b". The query request UPIU QREQ UPIU may include flags, a task tag, a query function, a total EHS length, a data segment length, transaction specific fields, etc.

The write descriptor transaction WT DSCPT, that is, transaction specific fields for a write descriptor code, may include an operation code (e.g., "02h"), a descriptor identifier number DESCRIPTOR IDN, an index INDEX, a selector SELECTOR, and a length LENGTH. Here, for the RPMB unit descriptor, a value of the descriptor identifier number DESCRIPTOR IDN is set to "02h", a value of the index INDEX is set to "C4h", and a value of the selector SELECTOR is set to "00h".

Fields of addresses K to K+Length-1 in the query request UPIU QREQ UPIU according to the UFS standard include descriptor data DSCPT DATA. In this regard, Length-1 may be 20. That is, the size of the descriptor data DSCPT DATA related to the RPMB unit descriptor may be 21 bytes. However, the disclosure is not limited thereto. Fields of the descriptor data DSCPT DATA may include various information such as "bLength", "bDescriptorIDN", "bMaxMutipleFailure", etc. "bLength", "bDescriptorIDN", etc. are defined in the UFS standard. "bMaxMutipleFailure" is the maximum number of consecutive failures allowed, i.e., the maximum number of consecutive failures described above. When the number of consecutive failures exceeds a value of "bMaxMutipleFailure", the target device 1100 may execute a power cycle to receive power again or switch an operation mode to a read only mode. The value of "bMaxMutipleFailure" may be set differently for each device (i.e., device specific). When the initiator device 1000 sets the value of "bMaxMutipleFailure" and transmits the query request UPIU QREQ UPIU to the target device 1100, the target device 1100 may set the same number of index fields 916 as the value of "bMaxMutipleFailure".

The query request UPIU QREQ UPIU may also include transaction specific fields for a write descriptor code.

FIG. 11 is a diagram illustrating a format of the query request UPIU QREQ UPIU related to a read descriptor according to an embodiment.

Referring to FIG. 11, the initiator device 1000 may transmit the query request UPIU QREQ UPIU to the target device 1100.

The target device 1100 may transmit a query response UPIU QRESP UPIU including a read descriptor transaction RD DSCPT and descriptor data DSCPT DATA to the initiator device 1000. The query request UPIU QREQ UPIU may also include the read descriptor transaction RD DSCPT, that is, transaction specific fields for a read descriptor code. An operation code of the query response UPIU QRESP UPIU according to the UFS standard is "xx11 0110b", and the query response UPIU QRESP UPIU may include flags, task tags, etc. in the same manner as the query request UPIU QREQ UPIU. Similar to FIG. 10, the transaction specific fields for the read descriptor code may include an operation code (e.g., "01h"), the descriptor identifier number DESCRIPTOR IDN, the index INDEX, the selector SELECTOR, and the length LENGTH. In the same manner as in FIG. 10, fields of addresses K to K+Length-1 in the query request UPIU QREQ UPIU according to the UFS standard include the descriptor data DSCPT DATA. The initiator device 1000 may check the value of "bMaxMutipleFailure" set in the target device 1100.

FIG. 12 is a diagram illustrating a format of the query request UPIU QREQ UPIU related to write attributes according to an embodiment.

Referring to FIG. 12, the initiator device 1000 may transmit the query request UPIU QREQ UPIU including the query request QREQ and a write attribute WT ATTRBT to the target device 1100, and the target device 1100 may transmit the query request UPIU QREQ UPIU to the initiator device 1000.

The write attribute WT ATTRBT, that is, transaction specific fields for a write attribute code, may include an operation code (e.g., "04h"), an attribute identifier number ATTRIBUTE IDN, the index INDEX, the selector SELECTOR, and values VALUE [63:0].

In an embodiment, a value of the attribute identifier number ATTRIBUTE IDN may be "47h". The name of the attribute may be "bWFIMutipleFailureMode". "bWFIMutipleFailureMode" specifies a method of handling a case when a request including a write failure index fails multiple times. An access property of "bWFIMutipleFailureMode" is read or written once, and the size of "bWFIMutipleFailureMode" may be 1 byte. The type of "bWFIMutipleFailureMode" may be a device level attribute D. A manufacturer default value (hereinafter referred to as "MDV") of "bWFIMutipleFailureMode" may be 0. When the value of "bWFIMutipleFailureMode" is "00h", nothing happens in the target device 1100 (e.g., the device 100). In an embodiment, when the value of "bWFIMutipleFailureMode" is "00h", the target device 1100 may execute an ignore mode and ignore a request from an external device (e.g., the host 10, the attacker 50, the initiator device 1000, etc.) in the ignore mode. When the value of "bWFIMutipleFailureMode" is "01h", a power cycle may be forced on the target device 1100. When the value of "bWFIMutipleFailureMode" is "02h", the target device 1100 may execute a read only mode. The read only mode may be a mode in which the access property corresponding to an RPMB region may be read only. That is, in the read only mode, the target device 1100 may only read data stored in the RPMB region and may not write data in the RPMB region.

In an embodiment, a value of the attribute identifier number ATTRIBUTE IDN may be "48h". The name of the attribute may be "bWFIDataType". "bWFIDataType" specifies a data type of the field (e.g., the index field 916) in which a write failure index is to be stored. An access property of the "bWFIDataType" is read or written once, and the size of the "bWFIDataType" may be 1 byte. A type of "bWFIDataType" may be the device level attribute D. The MDV of the "bWFIDataType" may be 0. When the value of "bWFIDataType" is "00h", a data type of the index field 916 may be an integer method (e.g. integer format) determined by an arbitrary number of 16 bytes. When the value of "bWFIDataType" is "01h", the data type of the index field 916 may be a bitmap method (e.g. bitmap format).

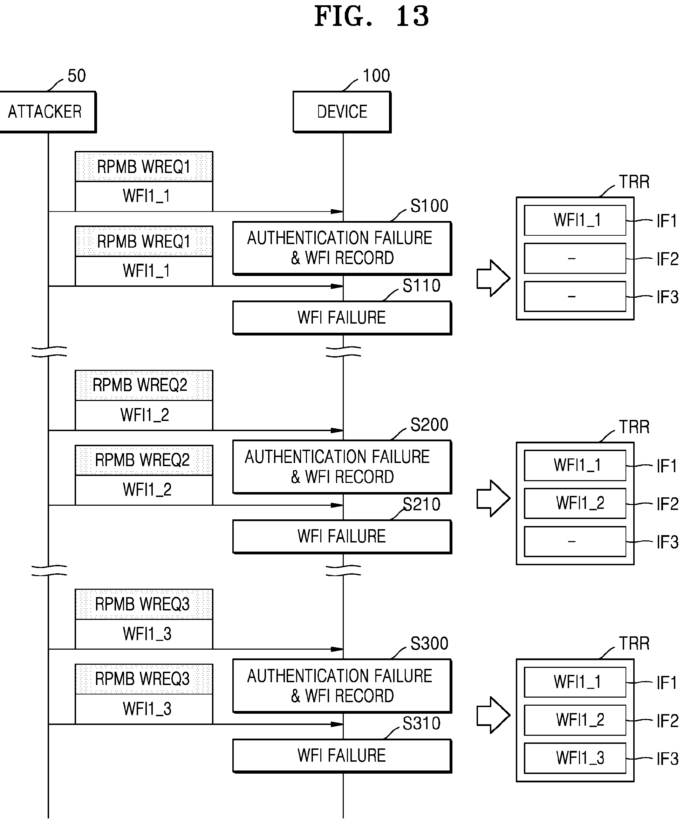

FIG. 13 is a diagram illustrating an embodiment in which a write failure index is recorded.

Referring to FIG. 13, similar to the description given above with reference to FIG. 2, the host 10 may output a first RPMB write request RPMB WREQ1 including a write failure index WFI1_1. In this regard, the attacker 50 may attempt a replay attack. For example, the attacker 50 may steal (e.g. intercept) the first RPMB write request RPMB WREQ1 from the host 10, modify first original data of the host 10, and transmit the modified data and the first RPMB write request RPMB WREQ1 to the device 100. The first RPMB write request RPMB WREQ1 may include a message authentication code, meta information, etc. When a write failure index is not recorded (e.g. has not previously be recorded) in a target RPMB region TRR of the device 100, as described above with reference to FIG. 2, the device 100 may perform an authentication operation by comparing two message authentication codes, and because data modified by the attacker 50 is transmitted to the device 100, the two message authentication codes are different from each other, and accordingly, a result of an authentication operation is processed as a failure. That is, the device 100 may process the result of the authentication operation as a failure and record the write failure index WFI1_1 (S100). For example, the memory controller 110 may store a value of the write failure index WFI1_1 in a first index field IF1 of the target RPMB region TRR. Here, the number of index fields of the target RPMB region TRR may correspond to a value of "bMaxMutipleFailure" set in an RPMB unit descriptor. For example, it is assumed that the number of index fields of the target RPMB region TRR is 3 with reference to FIG. 13. Thereafter, at any timing, the attacker 50 may provide the first RPMB write request RPMB WREQ1 and the first original data to the device 100. In this case, the two message authentication codes may be the same, but the device 100 may first compare write failure indices with each other, because the write failure index WFI1_1 matches, determine that authentication has failed (S110), and set a code value of the result field RSLT to "000Dh" (WFI failure). In this case, in the replay attack, once the write failure index WFI1_1 is stored in the device 100, even when the same write failure index WFI1_1 is repeatedly transmitted to the device 100, storing the write failure index WFI1_1 may be omitted. Accordingly, waste of RPMB resources may be prevented and RPMB resources may be secured.

The host 10 may output a second RPMB write request RPMB WREQ2 including a write failure index WFI1_2. The second RPMB write request RPMB WREQ2 may be a request independent of the first RPMB write request RPMB WREQ1. In this regard, the attacker 50 may attempt the replay attack. The device 100 may compare write failure indices, when a value of the write failure index WFI1_2 is different from a value of the write failure index WFI1_1, perform an authentication operation, but authentication fails again because the two message authentication codes are different, and the value of the write failure index WFI1_2 may be stored in a second index field IF2 of the target RPMB region TRR. That is, the device 100 may process the result of the authentication operation as a failure and record the write failure index WFI1_2 (S200). The write failure index WFI1_2 may be stored in a second index field IF2 of the target RPMB region TRR. Thereafter, at an arbitrary timing, when the attacker 50 provides a second RPMB write request RPMB WREQ2) and second original data stolen from the host 10 to the device 100, because the write failure index WFI1_2 is stored in the device 100, authentication may be processed as a failure even when the two message authentication codes are the same (S210).

The host 10 may output a third RPMB write request RPMB WREQ3 including a write failure index WFI1_3. The first RPMB write request RPMB WREQ1, the second RPMB write request RPMB WREQ2, and the third RPMB write request RPMB WREQ3 may be independent requests. In this case, the attacker 50 may attempt the replay attack again. The device 100 may process the result of the authentication operation as a failure due to the mismatch of the message authentication codes, and may store a value of the write failure index WFI1_3 in a third index field IF3 of the target RPMB region TRR (S300). Thereafter, even when the attacker 50 provides the third RPMB write request RPMB WREQ3 and third original data stolen from the host 10 to the device 100, authentication may be processed as a failure (S310).

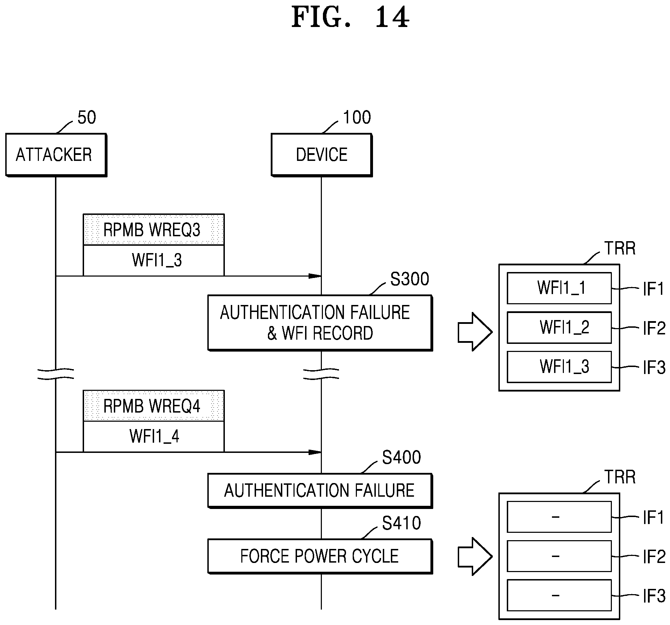

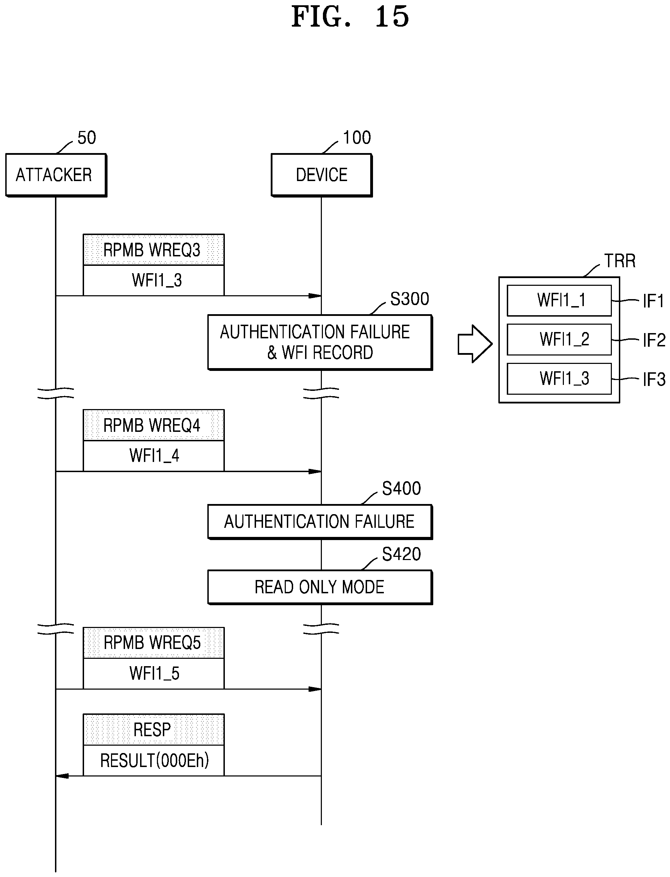

When the number of consecutive failures exceeds a preset maximum number, there may be no index field to additionally write the write failure index. In this case, the device 100 may execute any one of an ignore mode, a power cycle, and a read only mode. For example, when the number of consecutive authentication failures exceeds the maximum number, the device 100 may execute the attribute "bWFIMutipleFailureMode". Embodiments of the attribute "bWFIMutipleFailure Mode" will be described with reference to FIGS. 14 and 15.

FIG. 14 is a diagram illustrating an embodiment in which fields in which a write failure index WFI1_4 is stored are initialized in a power cycle.

Referring to FIGS. 13 and 14, in an embodiment, after different write failure indices are recorded to the maximum in the target RPMB region TRR (see S300), a fourth RPMB write request RPMB WREQ4 including the write failure index WFI1_4 may be transmitted to the device 100. The fourth RPMB write request RPMB WREQ4 may be independent from the first RPMB write request RPMB WREQ1, the second RPMB write request RPMB WREQ2, and the third RPMB write request RPMB WREQ3. When a result of an authentication operation on the fourth RPMB write request RPMB WREQ4 is processed as a failure due to a mismatch between message authentication codes (S400), the device 100 may execute the attribute "bWFIMutipleFailureMode". In an embodiment, when a value of "bWFIMutipleFailureMode" is set to "01h", the power cycle may be forced on the device 100 (S410). For example, after S300, the memory controller 110 may delete the write failure indices WFI1_1, WFI1_2, and WFI1_3 or set the same as default values (e.g., "0") to initialize the first index field IF1, the second index field IF2, and the third index field IF3 of the target RPMB region TRR.

FIG. 15 is a diagram illustrating an embodiment in which fields in which write failure indices WFI1_4 and WFI1_5 are stored are initialized in a read only mode.

Referring to FIGS. 13 and 15, in an embodiment, when the fourth RPMB write request RPMB WREQ4 including the write failure index WFI1_4 is transmitted to the device 100 after S300, and a result of an authentication operation on the fourth RPMB write request RPMB WREQ4 is processed as a failure due to a mismatch in message authentication codes (S400), the device 100 may execute the attribute "bWFIMutipleFailure Mode". In an embodiment, when a value of "bWFIMutipleFailureMode" is set to "02h", the device 100 may execute the read only mode (S420). After S420, when a fifth RPMB write request RPMB WREQ5 including a write failure index WFI1_5 is transmitted to the device 100, in the read only mode, the device 100 may set a code value of the authentication result to "000Eh" and output the response RESP including a result RESULT. Here, "000Eh" indicates that authentication has failed because the device 100 is running in the read only mode as described above with reference to FIG. 5. For example, in the read only mode, the memory controller 110 may transmit the response RESP including a second code value to an external device. The second code value may indicate that the authentication operation is a failure with respect to a write request (e.g., the fifth RPMB write request RPMB WREQ5) provided by the external device, and may be "000Eh".

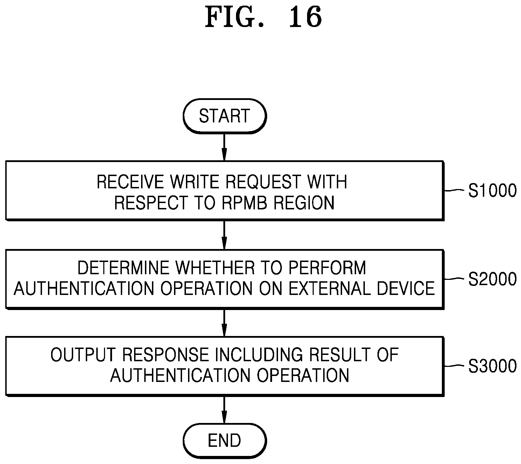

FIG. 16 is a flowchart illustrating a method of operating the device 100 according to an embodiment.

Referring to FIGS. 1 and 16, the device 100 may be a UFS device that communicates with an external device. The external device may be, for example, the host 10 or the attacker 50.

The device 100 may perform an operation S1000 of receiving a write request with respect to an RPMB region. In an embodiment, the write request may include a first message authentication code, a first write failure index, and meta information. The write request according to an embodiment may further include data such as an RPMB message data frame. Embodiments of the write request are the same as described above with reference to FIGS. 3 to 8 and 13 to 15. The first message authentication code may be calculated based on the first write failure index and the meta information. An embodiment in which the first message authentication code is calculated is the same as described above with reference to FIGS. 2 and 8.

The device 100 may perform an operation S2000 of determining whether to perform an authentication operation on the external device, based on a second write failure index included in the RPMB region and the first write failure index. The RPMB region may be included in the device 100, and the second write failure index may refer to a write failure index stored in an index field of the RPMB region. The embodiment of operation S2000 is the same as described above with reference to FIG. 8.

The device 100 may perform an operation S3000 of outputting a response including a result of the authentication operation. The result of the authentication operation may be any one of the code values of the result field RSLT described above with reference to FIG. 5.

In an embodiment, operation S2000 may include an operation of comparing a value of the first write failure index with a value of the second write failure index, and determining the result of the authentication operation as a failure with respect to the value of the first write failure index and the value of the second write failure index which are the same. The embodiment is the same as described above with reference to operation S10 of FIG. 8.

In an embodiment, operation S3000 may include an operation of setting a first code value indicating that the result of the authentication operation is a failure, and an operation of transmitting the response to the external device. The embodiment is the same as described above with reference to operation S50 of FIG. 8.

In an embodiment, the method of operating the device 100 may further include an operation of storing the first write failure index in the RPMB region. The embodiment is the same as described above with reference to operation S30 of FIG. 8.

In an embodiment, operation S2000 may further include an operation of comparing the number of failures in which the result of the authentication operation is determined to be a failure with a preset maximum number, and an operation of executing any one of a power cycle and a read only mode when the number of failures reaches the maximum number. The above embodiment is the same as described above with reference to operations S100 to S400 of FIG. 13.

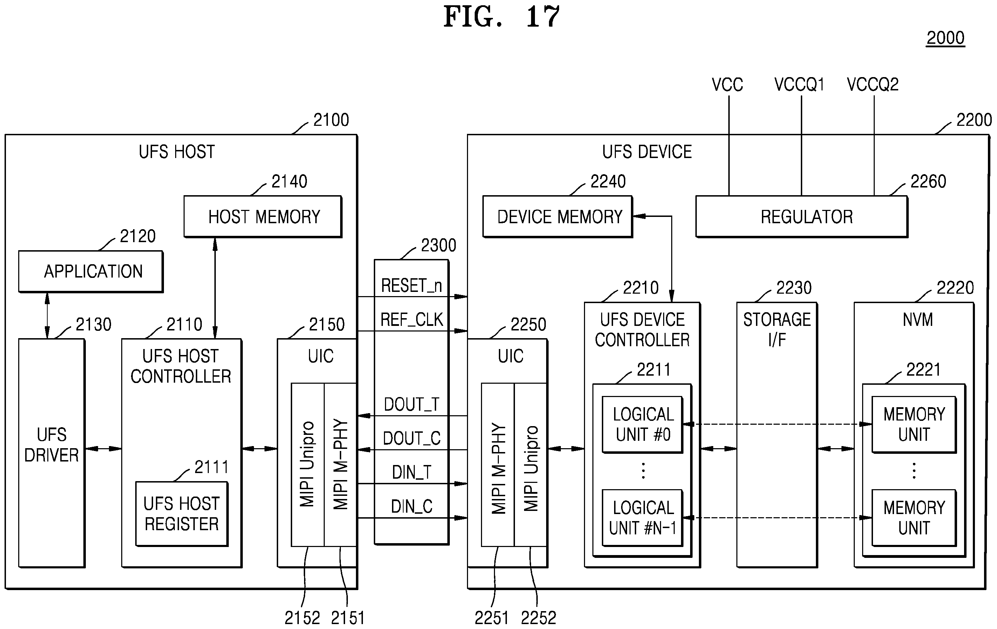

FIG. 17 is a diagram illustrating a UFS system 2000 according to an embodiment.

Referring to FIG. 17, the UFS system 2000 is a system that follows the UFS standard published by JEDEC and may include a UFS host 2100, a UFS device 2200, and a UFS interface 2300. The description of the system 1 of FIG. 1 given above may also be applied to the UFS system 2000 within a range that does not conflict with the following description of FIG. 17.

The UFS host 2100 and the UFS device 2200 may be connected to each other through the UFS interface 2300. When the host 10 of FIG. 1 is an AP, the UFS host 2100 may be implemented as a part of the corresponding AP. The UFS device 2200 may correspond to the device 100 of FIG. 1, and the UFS device controller 2210 and the nonvolatile memory 2220 may correspond to the memory controller 110 and the memory 120 of FIG. 1, respectively.

The UFS host 2100 may include a UFS host controller 2110, an application 2120, a UFS driver 2130, a host memory 2140, and a UFS interconnect (UIC) layer 2150. The UFS device 2200 may include a UFS device controller 2210, a nonvolatile memory 2220, a storage interface 2230, a device memory 2240, a UIC layer 2250, and a regulator 2260. The nonvolatile memory 2220 may include a plurality of memory units 2221, and the memory unit 2221 may include a V-NAND flash memory having a 2D structure or a 3D structure, but may include another type of nonvolatile memory such as phase change random-access memory (PRAM) and/or resistive random-access memory (RRAM). The UFS device controller 2210 and the nonvolatile memory 2220 may be connected to each other through the storage interface 2230. The storage interface 2230 may be implemented to comply with standard protocols such as toggle or ONFI.

The application 2120 may mean a program that desires communication with the UFS device 2200 to use the function of the UFS device 2200. The application 2120 may transmit an input-output request (IOR) to the UFS driver 2130 for input/output with respect to the UFS device 2200. The IOR may mean a read request, a write request, and/or a disk request of data, but is not limited thereto.

The UFS driver 2130 may manage the UFS host controller 2110 through a UFS-host controller interface (HCI). The UFS driver 2130 may convert the IOR generated by the application 2120 into a UFS command defined by the UFS standard, and transmit the converted UFS command to the UFS host controller 2110. One IOR may be converted into a plurality of UFS commands. The UFS command may be basically a command defined by the SCSI standard, but may also be a UFS standard dedicated command.

The UFS host controller 2110 may transmit the UFS command converted by the UFS driver 2130 to the UIC layer 2250 of the UFS device 2200 through the UIC layer 2150 and the UFS interface 2300. In this process, the UFS host register 2111 of the UFS host controller 2110 may serve as a command queue (CQ).

The UIC layer 2150 on the side of the UFS host 2100 may include MIPI M-PHY 2151 and MIPI UniPro 2152 and the UIC layer 2250 on the side of the UFS device 2200 may also include MIPI M-PHY 2251 and MIPI UniPro 2252.

The UFS interface 2300 may include a line transmitting a reference clock REF_CLK, a line transmitting a hardware reset signal RESET_n with respect to the UFS device 2200, a pair of lines transmitting differential input signal pairs DIN_t and DIN_c, and a pair of lines transmitting differential output signal pairs DOUT_t and DOUT_c.

A frequency value of the reference clock REF_CLK provided from the UFS host 2100 to the UFS device 2200 may be one of four values of 19.2 MHz, 26 MHz, 38.4 MHz, and 52 MHz, but is not limited thereto. The UFS host 2100 may change the frequency value of the reference clock REF_CLK even during operation, that is, during data transmission and reception between the UFS host 2100 and the UFS device 2200. The UFS device 2200 may generate clocks of various frequencies from the reference clock REF_CLK provided from the UFS host 2100, by using a phase-locked loop PLL. In addition, the UFS host 2100 may set a value of a data rate between the UFS host 2100 and the UFS device 2200 through the frequency value of the reference clock REF_CLK. That is, the value of the data rate may be determined depending on the frequency value of the reference clock REF_CLK.

The UFS interface 2300 may support multiple lanes, and each lane may be implemented as a differential line pair. For example, the UFS interface 2300 may include one or more receive lanes and one or more transmit lanes. In FIG. 17, the pair of lines transmitting differential input signal pairs DIN_T and DIN_C may constitute a receive lane, and the pair of lines transmitting differential output signal pairs DOUT_T and DOUT_C may constitute a transmit lane. Although FIG. 17 illustrates one transmit lane and one receive lane, the number of transmit lanes and receive lanes may be changed.

The receive lane and the transmit lane may transmit data in a serial communication method, and a structure in which the receive lane and the transmit lane are separated enables full-duplex communication between the UFS host 2100 and the UFS device 2200. That is, the UFS device 2200 may transmit data to the UFS host 2100 through the transmit lane even while receiving data from the UFS host 2100 through the receive lane. In addition, control data such as commands from the UFS host 2100 to the UFS device 2200 and user data that the UFS host 2100 intends to store in the nonvolatile memory 2220 of the UFS device 2200 or read from the nonvolatile memory 2220 may be transmitted through the same lane. Accordingly, it is not necessary to further provide a separate lane for data transmission between the UFS host 2100 and the UFS device 2200 in addition to the pair of receive lanes and the pair of transmit lanes.

The UFS device controller 2210 of the UFS device 2200 may control the overall operation of the UFS device 2200. The UFS device controller 2210 may manage the nonvolatile memory 2220 through logical units (LUs) 2211 which is a logical data storage unit. The number of LUs 2211 may be 8, but is not limited thereto. The UFS device controller 2210 may include a flash translation layer (FTL), and may convert a logical data address, e.g., an LBA, transferred from the UFS host 2100 into a physical data address, e.g., a physical block address (PBA), by using address mapping information of the FTL. In the UFS system 2000, a logical block for storing user data may have the size of a certain range. For example, the minimum size of the logic block may be set to 4 Kbyte.

When a command from the UFS host 2100 is input to the UFS device 2200 through the UIC layer 2250, the UFS device controller 2210 may perform an operation according to the input command and transmit a completion response to the UFS host 2100 when the operation is completed.

For example, when the UFS host 2100 intends to store the user data in the UFS device 2200, the UFS host 2100 may transmit a data storage command to the UFS device 2200. When receiving a user data ready-to-transfer response from the UFS device 2200, the UFS host 2100 may transmit the user data to the UFS device 2200. The UFS device controller 2210 may temporarily store the received user data in the device memory 2240, and store the user data temporarily stored in the device memory 2240 at a selected location in the nonvolatile memory 2220 based on the address mapping information of the FTL.

For another example, when the UFS host 2100 intends to read the user data stored in the UFS device 2200, the UFS host 2100 may transmit a data read command to the UFS device 2200. Upon receiving the command, the UFS device controller 2210 may read the user data from the nonvolatile memory 2220 based on the data read command and temporarily store the read user data in the device memory 2240. In such a reading process, the UFS device controller 2210 may detect and correct errors in the read user data by using a built-in error correction code (ECC) engine. More specifically, the ECC engine may generate parity bits with respect to write data to be written to the nonvolatile memory 2220, and the generated parity bits may be stored in the nonvolatile memory 2220 together with the write data. When reading the data from the nonvolatile memory 2220, the ECC engine may correct errors in the read data by using the parity bits read from the nonvolatile memory 2220 along with the read data, and output read data with the corrected errors.

Also, the UFS device controller 2210 may transmit the user data temporarily stored in the device memory 2240 to the UFS host 2100. In addition, the UFS device controller 2210 may further include an advanced encryption standard (AES) engine. The AES engine may perform at least one of an encryption operation and a decryption operation on data that is input to the UFS device controller 2210, by using a symmetric key algorithm.

The UFS host 2100 may store commands to be transmitted to the UFS device 2200 in order in the UFS host register 2111 that may function as a command queue, and transmit the commands to the UFS device 2200 in the order. In this regard, the UFS host 2100 may transmit a next command waiting in the CQ to the UFS device 2200 even when a previously transmitted command is still being processed by the UFS device 2200, that is, even before receiving a notification that the previously transmitted command has been completely processed by the UFS device 2200, and accordingly, the UFS device 2200 may also receive the next command from the UFS host 2100 while processing the previously transmitted command. The maximum queue depth of commands that may be stored in the CQ may be, for example, 32. In addition, the CQ may be implemented as a circular queue type that represents the beginning and end of a command column stored in a queue through a head pointer and a tail pointer, respectively.

Each of the plurality of memory units 2221 may include a memory cell array and a control circuit controlling an operation of the memory cell array. The memory cell array may include a two-dimensional (2D) memory cell array or a three-dimensional (3D) memory cell array. The memory cell array includes a plurality of memory cells, and each of the memory cells may be a single level cell (SLC) storing 1-bit information, but may also be a cell storing 2-bit or more information, such as a multi-level cell (MLC), a triple level cell (TLC), and a quadruple level cell (QLC). The 3D memory cell array may include a vertically oriented vertical NAND string such that at least one memory cell is located on another memory cell.

Power supply voltages VCC, VCCQ, VCCQ2, etc. may be input to the UFS device 2200. VCC is a main power supply voltage for the UFS device 2200 and may have a value of 2.4 V to 3.6 V. VCCQ is a power supply voltage for supplying a low range of voltage, mainly for the UFS device controller 2210, and may have a value of 1.14 V to 1.26 V. VCCQ2 is a power supply voltage for supplying a voltage in a range lower than VCC but higher than VCCQ, mainly for an input/output interface such as an MIPIM-PHY 2251, and may have a value of 1.7 V to 1.95 V. The power supply voltages VCC, VCCQ, and VCCQ2 may be supplied for each component of the UFS device 2200 via the regulator 2260. The regulator 2260 may be implemented as a set of unit regulators respectively connected to different power supply voltages among the power supply voltages VCC, VCCQ, and VCCQ2.

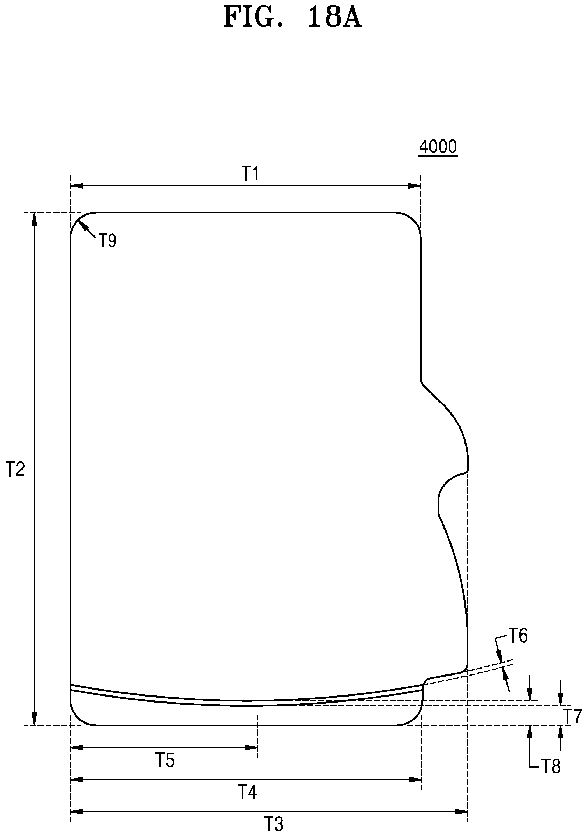

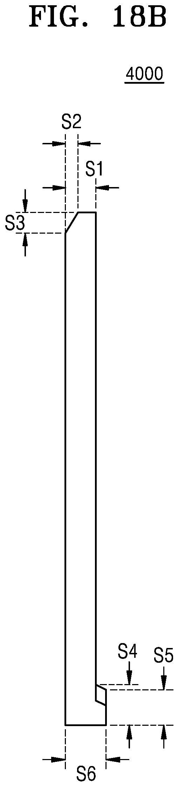

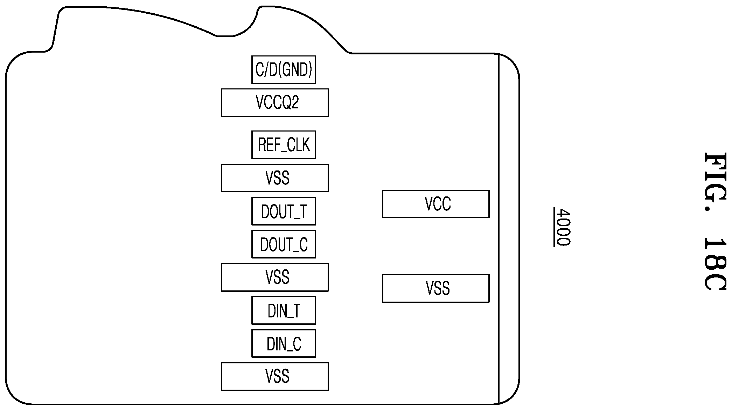

FIGS. 18A, 18B, and 18C are diagrams illustrating a form factor of a UFS card. When the UFS device 2200 of FIG. 17 is implemented in the form of a UFS card 4000, the appearance of the UFS card 4000 may follow those shown in FIGS. 18A, 18B, and 18C.

FIG. 18A illustrates a top view of the UFS card 4000. Referring to FIG. 18A, it may be confirmed that the UFS card 4000 follows a shark-shaped design as a whole. With respect to FIG. 18A, the UFS card 4000 may have dimension values as shown in Table 1 below.

**Table 1:**

| Category | Dimensions (mm) |
|---|---|
| T1 | 9.70 |
| T2 | 15.00 |
| T3 | 11.00 |
| T4 | 9.70 |
| T5 | 5.15 |
| T6 | 0.25 |
| T7 | 0.60 |
| T8 | 0.75 |
| T9 | R0.80 |

FIG. 18B illustrates a side view of the UFS card 4000. With respect to FIG. 18B, the UFS card 4000 may have dimension values as shown in Table 2 below.

**Table 2:**

| Category | Dimensions (mm) |
|---|---|
| S1 | 0.74±0.06 |
| S2 | 0.30 |
| S3 | 0.52 |
| S4 | 1.20 |
| S5 | 1.05 |
| S6 | 1.00 |

FIG. 18C illustrates a bottom view of the UFS card 4000. Referring to FIG. 18C, a plurality of pins for electrical contact with UFS slots may be formed on the bottom of the UFS card 4000, and the function of each of the pins will be described below. Based on the symmetry between the top and the bottom of the UFS card 4000, part of information about the dimensions described with reference to FIG. 18A and Table 1 (e.g., T1 to T5 and T9) may also be applied to the bottom view of the UFS card 4000 as shown in FIG. 18C.

A plurality of pins may be formed in the bottom of the UFS card 4000 for electrical connection with a UFS host, and as shown in FIG. 18C, the total number of pins may be 12. Each of the pins may have a rectangular shape, and a signal name corresponding to the pin is as shown in FIG. 18C. Schematic information about each of the pins may be referred to Table 3 below, and the above-described description with reference to FIG. 17 may also be referred to.

**Table 3:**

| Number | Signal name | Description | Dimensions (mm) |
|---|---|---|---|
| 1 | Vss | Ground (GND) | 3.00 × 0.72±0.05 |
| 2 | DIN_C | Differential input signals (DIN_C is a | 1.50 × 0.72±0.05 |
| 3 | DIN T | negative node and DIN_T is a positive node) input from a host to the UFS card 4000 | |
| 4 | Vss | Same as number 1 | 3.00 × 0.72±0.05 |
| 5 | DOUT_C | Differential output signals (DOUT_C is a negative node and DOUT_T is a positive node) output from the UFS card 4000 to the host | 1.50 × 0.72±0.05 |
| 6 | DOUT_T | | |
| 7 | Vss | Same as number 1 | 3.00 × 0.72±0.05 |
| 8 | REF_CLK | Reference clock from the host to the UFS card 4000 | 1.50 × 0.72±0.05 |
| 9 | VCCQ2 | Power supply voltage with a relatively low value compared to VCC, mainly provided for a PHY interface or a controller | 3.00 × 0.72±0.05 |
| 10 | C/D(GND) | Signals for Card Detection | 1.50 × 0.72±0.05 |
| 11 | Vss | Same as number 1 | 3.00 × 0.80±0.05 |
| 12 | Vcc | Main power supply voltage | |

At least one of the components, elements, modules, units, or the like (collectively "components" in this paragraph) represented by a block or an equivalent indication (collectively "block") in the above embodiments, including the drawings such as FIGS. 1-7, 9-12 and 17, for example, memory controller, memory, buffer, host, device, or the like, may carry out the above-described function or functions. These blocks may be physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

While the disclosure has been particularly shown and described with reference to embodiments thereof, it will be understood that various changes in form and details may be made therein without departing from the scope of the following claims.

## Claims

1. A universal flash storage, UFS, device comprising:
a memory comprising a replay protection memory block, RPMB, region, the RPMB region comprising one or more index fields storing a second write failure index; and
a memory controller comprising at least one controller memory storing one or more instructions,
wherein the memory controller is configured to execute the one or more instructions to cause the UFS device to:
receive, from an external device, an RPMB write request comprising a first write failure index, meta information, and a first message authentication code generated based on the first write failure index and the meta information, and
determine whether to perform an authentication operation on the external device based on the first write failure index and the second write failure index.

2. The UFS device of claim 1, wherein the memory controller is configured to execute the one or more instructions to cause the UFS device to:
compare a value of the first write failure index with a value of the second write failure index,
based on the value of the first write failure index being different from the value of the second write failure index, perform the authentication operation based on the RPMB write request, and
based on the value of the first write failure index being the same as the value of the second write failure index, determine a result of the authentication operation as a failure.

3. The UFS device of claim 1 or claim 2, wherein the memory controller is configured to execute the one or more instructions to cause the UFS device to:
obtain a second message authentication code based on a preset algorithm, the first write failure index, and the meta information,
compare a value of the first message authentication code with a value of the second message authentication code, and
determine whether the authentication operation succeeds based on whether the value of the first message authentication code matches the value of the second message authentication code.

4. The UFS device of any preceding claim, wherein the memory controller is configured to execute the one or more instructions to cause the UFS device to: based on a result of the authentication operation being a failure, store the first write failure index in the RPMB region and transmit, to the external device, a response comprising a first code value indicating that the authentication operation is a failure.

5. The UFS device of any preceding claim, wherein the memory controller is configured to execute the one or more instructions to cause the UFS device to:
based on the authentication operation failing a predetermined number of times, enter at least one of an ignore mode, a power cycle, or a read only mode.

6. The UFS device of claim 5, wherein the memory controller is configured to execute the one or more instructions to cause the UFS device to:
based on the UFS device entering the power cycle, initialize a first index field in which the first write failure index is stored and a second index field in which the second write failure index is stored.

7. The UFS device of claim 5 or claim 6, wherein the memory controller is configured to execute the one or more instructions to cause the UFS device to:
based on the UFS device entering the read only mode, transmit, to the external device, a response comprising a second code value indicating that the authentication operation is a failure with respect to a write request of the external device.

8. The UFS device of any preceding claim, wherein the memory controller is configured to execute the one or more instructions to cause the UFS device to:
based on a result of the authentication operation being successful, initialize the one or more index fields.

9. The UFS device of any preceding claim, wherein the RPMB write request comprises at least one of an authenticated data write request, a secure write protect configuration block write request, and an RPMB purge enable request.

10. A method of operating a universal flash storage, UFS, device configured to communicate with an external device, the method comprising:
receiving a replay protection memory block, RPMB, write request comprising a first write failure index, meta information, and a first message authentication code generated based on the first write failure index and the meta information;
identifying whether to perform an authentication operation on the external device based on a second write failure index included in an RPMB region of the UFS device and the first write failure index; and
based on performing the authentication operation, outputting a response comprising a result of the authentication operation.

11. The method of claim 10, wherein the identifying whether to perform the authentication operation on the external device comprises:
comparing a value of the first write failure index with a value of the second write failure index; and
based on the value of the first write failure index and the value of the second write failure index being the same, identifying the result of the authentication operation as a failure.

12. The method of claim 11, wherein the outputting the response comprising the result of the authentication operation comprises:
setting a first code value indicating that the authentication operation is a failure; and
transmitting the response to the external device.

13. The method of claim 11 or claim 12, further comprising: storing the first write failure index in the RPMB region.

14. The method of any of claims 11-13, wherein the identifying whether to perform the authentication operation on the external device includes
based on the authentication operation failing a predetermined number of times, entering at least one of an ignore mode, a power cycle, and a read only mode.

15. The method of any of claims 10-14, wherein the RPMB write request comprises at least one of an authenticated data write request, a secure write protect configuration block write request, and an RPMB purge enable request.
